# EUROPÄISCHE PATENTSCHRIFT

(11) **EP 0 644 349 B1**
(45) Veröffentlichungstag und Bekanntmachung des Hinweises auf die Patenterteilung: **27.08.1997**
(21) Anmeldenummer: 94102555.3
(22) Anmeldetag: 21.02.1994
(51) Int. Cl.: F16D 65/12

(54) **Schraubenverbindung zwischen Bremsringen und Nabe einer Scheibenbremse**
Screw connection between brake rings and hub of a disc brake
Assemblage à vis entre les anneaux de freinage et le moyeu d'un frein à disque

(30) Priorität: 02.08.1993 DE 4325934
(43) Veröffentlichungstag der Anmeldung: 22.03.1995
(73) Patentinhaber: KNORR-BREMSE AG, 80809 München (DE)
(72) Erfinder: Wirth, Xaver, Dr., D-85737 Ismaning (DE)

(56) Entgegenhaltungen:
- EP-A- 0 062 774
- EP-A- 0 215 597
- DE-A- 2 828 137

## Beschreibung

Die Erfindung betriffl eine Scheibenbremse nach dem Gattungsbegriff des einzigen Patentanspruches.

Bei Scheibenbremsen der in Rede stehenden Art (EP-A-0 062 774) müssen einerseits die auftretenden Bremsmomente in einwandfreier Weise von den Reibringen auf die Radscheibe übertragen werden, ohne daß es zu unerwünschten Relativbewegungen zwischen den Teilen kommt, welche kurzzeitig Zerstörungen auslösen könnten, andererseits müssen die Reibringe mit der Radscheibe derartig verbunden sein, daß durch Wärmeausdehnung bedingte Relativbewegungen stattfinden können. Fernerhin muß die Drehmomentübertragung bei derartigen Scheibenbremsverbindungen mittels Reibschluß vorgenommen werden; gleichzeitig muß eine Zentrierung der Reibringe im kalten und warmen Zustand gesichert sein.

Der der Reibwirkung ausgesetzte Reibring erfährt im Betrieb eine Erwärmung auf mehrere 100° Celsius, was eine allseitig radial gerichtete Ausdehnung in einer Größenordnung von mehr als 1mm zur Folge haben kann. Somit ist den bei diesen thermisch bedingten Ausdehnungen auftretenden, radial nach außen gerichteten Kräften bei der Auswahl der Befestigung der Reibringe an der Nabe bzw. am Übergang zur Radscheibe Rechnung zu tragen.

Bekannte Lösungen zur Verbindung der Reibringe mit der Nabe bzw. dem Übergang zur Radscheibe sehen die Verwendung von Kulissensteinen vor, an welchen die Reibringe mittels Führungsnuten bei Erwärmung radial entlanggleiten können. Konstruktionen dieser Art sind baulich aufwendig und aus Platzgründen nicht in jedem Fall verwendbar, so daß sich ihre Anwendung primär aus Kostengründen nicht anbietet.

Davon ausgehend besteht die Aufgabe der Erfindung darin, eine Schraubenverbindung zwischen Reibring und Nabe zu schaffen, die in der Lage ist, die Übertragung dynamischer Massenkräfte zu gewährleisten und welche eine Zentrierung der Reibringe im kalten und im warmen Zustand sicherstellt. Die Verbindungen sollen gleichwohl von baulich einfacher und damit kostengünstiger Art sein.

Zur Lösung dieser Aufgabe dienen die Merkmale nach dem Kennzeichnungsteil des einzigen Patentanspruches.

Die Art der Gleitkopfschraubenverbindung mit Hilfe des baulich einfach gestalteten Mehrkant-Kopfes, der von einer entsprechenden, radial angeordneten Nut des Reibrings verdrehsicher aufgenommen wird, führt bei kostengünstiger Auslegung zu einer einwandfreien Zentrierung der Reibringe gegenüber der Radnabe, also gegenüber dem Rad des Schienenfahrzeuges. Es ist gleichzeitig sichergestellt, daß die Bremsmomente über die Reibpaarungen zwischen Radnabe und Reibring sicher übertragbar sind, da die Gleitkopfschrauben mit Hilfe elastisch verformbarer Elemente, so z.B. in Form von Tellerfedern, vorspannbar sind.

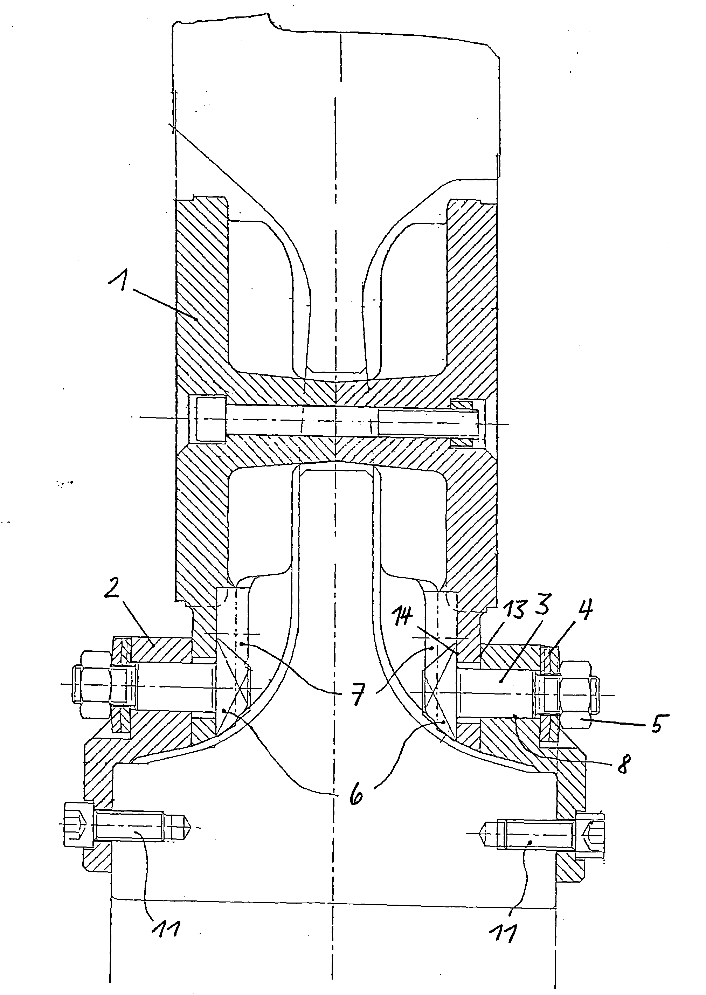

Die Erfindung ist nachfolgend anhand eines Ausführungsbeispiels unter Bezugnahme auf die einzige Zeichnung erläutert. Diese zeigt in Schnittansicht die erfindungsgemäße Gleitkopfschrauben-Verbindung zwischen Radnabe und Reibring.

In der einzigen Figur ist der Aufbau der erfindungsgemäßen Gleitkopfschrauben-Verbindung dargestellt. Es ist ein Reibring 1 vorgesehen, welcher mit Hilfe der erfindungsgemäßen Verbindung mit der Radnabe 2 unter Vorspannung verbunden ist. Dies geschieht mit mehreren auf einem Teilkreis unter Abstand angeordneten, erfindungsgemäßen Gleitkopfschrauben 3. Die Gleitkopfschrauben werden jeweils mittels einer Mutter 5 gegenüber der Radnabe 2 vorgespannt, wobei elastisch verformbare Elemente 4, z.B. Tellerfedern, für die Erzeugung der Vorspannung vorgesehen sind.

Jede der Gleitkopfschrauben 3 weist einen rechteckigen oder quadratischen Mehrkant-Kopf 6 auf, der in einer entsprechenden, radial angeordneten Nut 7 des Reibringes 1 geführt ist. Ein gewindefreier Schaft der Gleitkopfschraube 3 ist jeweils in einer Paßbohrung der Radnabe 2 spielfrei geführt. Die Gleitkopfschraube ist hierdurch exakt geführt. Da die Radnabe 2 mit Hilfe von Schrauben 11 mit dem eigentlichen Nabenkörper des Rades verbunden ist, ist die Radnabe als Bestandteil desselben anzusehen.

Durch die Vorspannkraft der Gleitkopfschraube 3, welche auf die Radnabe 2 einwirkt, wird das Bremsmoment reibschlüssig über die Teilfuge 13 zwischen Reibring 1 und Radnabe 2 übertragen. Fernerhin besteht ein Reibschluß über eine Teilfuge 14, welche zwischen dem Mehrkant-Kopf 6 und der der Teilfuge 13 gegenüberliegenden Seite des Reibringes 1 besteht, so daß dieser bei Erwärmung und Ausdehnung des Reibringes in den Teilfugen 13 und 14 ein sogenanntes Reibgleiten erfolgen kann. Dies bedeutet, daß sich die von den Gleitkopfschrauben durchsetzten Laschen des Reibringes nach Überwindung des Reibschlußes gegenüber der Radnabe 2 und dem Mehrkant-Kopf 6 verschieben können. Mittels der radial verlaufenden Nuten 7 des Reibrings 1 ergibt sich eine Zentrierung des Reibringes, und zwar unter Führung durch die Mehrkant-Köpfe 6, welche jeweils in einer Nut gleiten und rechteckig oder quadratisch ausgebildet sind.

Die aus der Zeichnung ersichtliche trapezförmige Ausbildung der Mehrkant-Köpfe 6 ist durch die naheliegende Rundung des Radprofils bedingt, so daß diese Ausführungsform lediglich den äußeren konstruktiven Bedingungen angepaßt ist. Zwischen der Radnabe 2 und der Mutter 5 sind die vorstehend genannten elastisch verformbaren Elemente 4 eingesetzt; diese können als Tellerfedern oder als Federringe ausgebildet sein. Die Vorspannung durch die Elemente 4 ist so bemessen, daß diese den Reibring 1 derart axial an die Radnabe 2 andrücken, daß die während des Betriebes auftretenden Bremsmomente von dem Reibring 1 durch Reibschluß auf die Nabe des Rades übertragen werden, während bei Ausdehnung des Reibrings 1 infolge Erwärmung eine Relativbewegung zwischen dem Reibring und dem jeweiligen Übergangsbereich zur Nabe stattfindet.

## Patentansprüche

1. Scheibenbremse für Schienenfahrzeuge, mit einer Gleitkopfschrauben-Verbindung zur Befestigung eines Reibrings (1) an einer Radnabe (2), wobei die Gleitkopfschrauben (3) jeweils mittels einer Mutter (5) und eines elastisch verformbaren Elementes (4) vorspannbar sind, **dadurch gekennzeichnet,**
daß die Gleitkopfschraube (3) einen Mehrkant-Kopf (6) aufweist, der von einer entsprechenden radial angeordneten Nut (7) des Reibrings (1) verdrehsicher aufgenommen wird;
daß der gewindefreie Schaft der Gleitkopfschraube (3) in einer Paßbohrung (8) der Radnabe (2) spielfrei geführt ist; und
daß die Mutter (5) am freien Ende der Gleitkopfschraube (3) gegenüber der Radnabe (2) verspannbar ist.

## Claims

1. Disc brake for rail vehicles, having a sliding head screw connection for securing a friction ring (1 ) on a wheel hub (2), the sliding head screws (3) each being capable of being pre-stressed by means of a nut (5) and an elastically deformable element (4), **characterised in that**
the sliding head screw (3) has a polygonal cap (6) which is held in a torsion-resistant manner by a corresponding radially disposed groove (7) in the friction ring (1);
the threadless shaft of the sliding head screw (3) is guided in a clearance-free manner in a bore (8) of the wheel hub (2); and
the nut (5) can be tightened at the free end of the sliding head screw (3) with respect to the wheel hub (2).

## Revendications

1. Frein à disque pour véhicules sur rails, comportant une liaison à vis à tête coulissante servant à fixer un anneau de friction (1) à un moyeu de roue (2), les vis à tête coulissante (3) pouvant être préalablement serrées respectivement à l'aide d'un écrou (5) et d'un élément déformable élastiquement (4), caractérisé en ce
que la vis à tête coulissante (3) comporte une tête polygonale (6), qui est reçue, avec blocage en rotation, dans une rainure radiale corerspondante (7) de l'anneau de friction (1);
que la tige non filetée de la vis à tête coulissante (3) est guidée sans jeu dans un perçage de montage (8) du moyeu de roue (2) ; et
que l'écrou (5) sur l'extrémité libre de la vis à tête coulissante (3) peut être serré par rappport au moyeu de roue (2).
